# EUROPÄISCHE PATENTANMELDUNG

(11) **EP 1 524 448 A1**
(43) Veröffentlichungstag der Anmeldung: **20.04.2005**
(21) Anmeldenummer: 05001070.1
(22) Anmeldetag: 10.12.1999
(51) Int. Cl.: F16D 55/40

(54) **Antriebseinheit, insbesondere für ein Flurförderfahrzeug**

(30) Priorität: 16.12.1998 DE 19857962
(62) Teilanmeldung aus: 99967930.1
(71) Anmelder: ZF FRIEDRICHSHAFEN AG, 88038 Friedrichshafen (DE)
(72) Erfinder: Stammberger, Christian, 02689 Taubenheim (DE); Stübner, Frank, 99894 Ernstroda (DE); Scharfenberg, Stephan, 99869 Tüttleben (DE)

(57) **Zusammenfassung**

Antriebseinheit, insbesondere für ein Flurförderfahrzeug, bei welcher ein Rad dadurch angetrieben wird, daß ein Stirnradgetriebe (2) von einem Motor angetrieben wird und das Abtriebsrad (3) des Stirnradgetriebes (2) mit einem Planetengetriebe in Verbindung steht, welches das Antriebsrad des Fahrzeugs antreibt. Zwischen Planetengetriebe und Stirnradgetriebe (2) ist eine Lamellenbremse angeordnet, welche das Abtriebsrad (3) kraftschlüssig mit dem Gehäuseteil (9) verbinden kann. Im drucklosen Zustand ist die Lamellenbremse (6) über Federn (17) geschlossen und durch Aufbringen eines hydraulischen Drucks in einem ersten Hydraulikzylinder (14) wird die Feststellbremse gelöst und durch Aufbringen eines hydraulischen Drucks auf einen zweiten Kolben (16) wird die Betriebsbremse betätigt, indem der zweite Kolben (16), welcher im Kolben (15) des ersten Hydraulikzylinders (14) angeordnet ist, axial bewegt wird und die Lamellenbremse (6) schließt.

## Beschreibung

Die Erfindung betrifft eine Antriebseinheit nach dem Oberbegriff des Patentanspruchs 1. Derartige Antriebe werden hauptsächlich in Flurförderfahrzeugen, wie z. B. Gabelstaplern, eingesetzt. Derartige Antriebe benötigen, um im dynamischen Betrieb zu verzögern, eine Betriebsbremse und, um im statischen Zustand, z. B. beim Heben einer Last, bei welcher das Fahrzeug sich nicht bewegen darf, eine Feststellbremse. Um die Antriebsmotoren möglichst kompakt ausgestalten zu können, sind bei diesen Antriebseinheiten Stirnradgetriebe vorgesehen, welche die Antriebsdrehzahl reduzieren und somit das Antriebsmoment vergrößern.

Die DE 40 10 742 C1 offenbart eine Antriebseinheit eines Flurförderfahrzeugs, bei welcher das Antriebsrad über ein Stirnradgetriebe und eine nachgeschaltete Planetenstufe angetrieben wird und als Betriebs- und Feststellbremse eine innerhalb des Getriebegehäuses angebrachte Lamellenbremse vorgesehen ist. Diese Lamellenbremse wird betätigt, indem eine Druckplatte über einen Hebel betätigt die Lamellenbremse schließt. Der Hebel kann nur bewegt werden, indem eine Zugkraft auf einen Seilzug gebracht wird, welcher mit dem Hebel verbunden ist. Somit wird durch dosiertes Aufbringen der Zugkraft auf den Seilzug die Betriebsbremse aktiviert und durch Halten der maximalen Zugkraft auf den Seilzug die Feststellbremse angelegt. Dies hat den Nachteil, daß bei einem gerissenen Seilzug jegliche Bremse des Fahrzeugs ohne Funktion ist. Des Weiteren muß der Seilzug optimal im Fahrzeug verlegt sein, um unnötige interne Reibung des Seilzugs zu verhindern und somit ein gleichmäßiges Ansprechen der Betriebsbremse zu gewährleisten.

Die DE 43 21 699 C1 offenbart eine Antriebseinheit für ein Flurförderfahrzeug, bei welcher das Antriebsrad über eine angetriebene Stirnradstufe und eine nachgeschaltete Planetenstufe angetrieben wird. Die Antriebseinheit weist eine integrierte Lamellenbremse auf, welche als Betriebs- und Feststellbremse benutzt wird. Die Betriebsbremse wird betätigt, indem ein hydraulischer Zylinder mit Druck beaufschlagt wird und dadurch ein Hebel in Bewegung gesetzt wird, um eine Druckplatte auf ein Lamellenpaket zu pressen und das Lamellenpaket zu schließen. Je höher der Druck im Hydraulikzylinder, um so größer die Bremswirkung. Die Feststellbremse wird dergestalt betätigt, daß ein an dem Hebel befestigter Seilzug unter Zugspannung gesetzt wird und die Zugspannung so lang aufrechterhalten bleibt, bis die Feststellbremse wieder entriegelt wird. Durch die hydraulische Kraftübertragung bei der Betriebsbremse, wird die ungünstige Reibung eines Seilzugs für das dosierte Abbremsen des Fahrzeugs eliminiert und es ist möglich, die Hydraulikleitung im Fahrzeug optimal zu verlegen. Da die Feststellbremse über einen unter Zugspannung gesetzten Seilzug eingelegt wird, ist es nicht möglich, ein abgestelltes Fahrzeug bei einem gerissenen Seilzug im gebremsten Zustand zu halten.

Der vorliegenden Erfindung liegt die Aufgabe zugrunde, eine Antriebseinheit für ein Flurförderfahrzeug zu schaffen, bei welcher bei einem Defekt der Verbindungen vom Fahrzeug zur Antriebseinheit die Feststellbremse automatisch eingelegt wird und bei geöffneter Feststellbremse das Fahrzeug dosiert über die Betriebsbremse abgebremst werden kann und die Bremse und deren Betätigungseinrichtung so in der Antriebseinheit angeordnet ist, daß der Raumbedarf der Antriebseinheit minimiert wird.

Die Aufgabe wird mit einer auch die kennzeichnenden Merkmale des Hauptanspruchs aufweisenden gattungsgemäßen Antriebseinheit gelöst.

Erfindungsgemäß besteht die Antriebseinheit aus einem ersten Stirnradgetriebe, welches direkt oder über eine nachgeschaltete Planetenstufe eine Nabe für ein Antriebsrad antreibt. Das Abtriebsrad des Stirnradgetriebes ist mit einem inneren Lamellenträger, welcher die Innenlamellen aufnimmt, drehfest verbunden und die Außenlamellen sind drehfest in einem feststehenden Gehäuseteil angeordnet. Indem eine Druckplatte das Lamellenpaket zusammenpreßt, wird das Abtriebsrad des Stirnradgetriebes kraftschlüssig mit dem feststehende Gehäuseteil verbunden. Je nach Anpreßkraft der Druckplatte auf das Lamellenpaket verändert sich das Bremsmoment. Die Feststellbremse wird eingelegt, indem ein Federpaket einen Kolben eines ersten Hydraulikzylinders axial bewegt und diese axiale Bewegung wird auf einen zweiten Kolben übertragen, welcher in dem Kolben des ersten Hydraulikzylinders angebracht ist und drückt die Druckplatte auf das Lamellenpaket, um dieses zu schließen. Dadurch ist das Lamellenpaket im drucklosen Zustand immer über die Federkraft geschlossen und es ist gewährleistet, daß die Feststellbremse bei einem Defekt, wie z. B. dem Riß eines Seilzugs oder dem Leck in einer Hydraulikleitung eingelegt bleibt. Durch Druckbeaufschlagung des ersten Hydraulikzylinders wird die Feststellbremse gelöst. Da sich in dem Kolben des ersten Hydraulikzylinders ein zweiter Kolben befindet, kann die Betriebsbremse bei druckbeaufschlagtem ersten Hydraulikzylinder durch Druckbeaufschlagen des zweiten Kolbens betätigt werden. Je nach Größe des hydraulischen Drucks auf den zweiten Kolben wird das Moment der Bremse verändert. Durch diese Ausführung der Betriebsbremse mit einer hydraulischen Betätigungseinrichtung läßt sich das Bremsmoment sehr gut dosieren. Die Lamellenbremse ist direkt dem ersten Stirnradgetriebe nachgeschaltet und innerhalb des Gehäuseteils angeordnet. Die Betätigungseinrichtung der Lamellenbremse ist koaxial zur Lamellenbremse angeordnet, wobei der Antrieb der Stirnradstufe oberhalb der Betätigungseinrichtung angeordnet ist und somit durch diese Anordnung eine sehr kompakte Antriebseinheit geschaffen wird. Die Druckplatte, welche auf das Lamellenpaket gedrückt wird, ist drehfest mit dem Abtriebsrad des Stirnradgetriebes verbunden und zwischen dieser Druckplatte und dem zweiten Kolben ist ein Axiallager angeordnet, so daß alle Kolben der Betätigungseinrichtung reine axiale Bewegungen ausführen. Dadurch ist eine optimale Auslegung der Dichtungen der Betätigungseinrichtung möglich, da die Dichtungen ebenfalls reine axiale Bewegungen ausführen. Durch die Integration der Betätigungseinrichtung für die Betriebsbremse und der Betätigungseinrichtung für die Feststellbremse in einer Betätigungsvorrichtung wird der zur Verfügung stehende Bauraum für die Antriebseinheit optimal ausgenutzt. Durch die Erfindung wird eine Antriebseinheit geschaffen, welche gewährleistet, daß auch bei einem Defekt in der Druckversorgung der Bremsanlage die Feststellbremse automatisch eingelegt wird und bei entriegelter Feststellbremse die Betriebsbremse dosiert betätigt werden kann. Eine Notentriegelung der Feststellbremse ist dadurch möglich, daß entweder der Kolben des ersten Hydraulikzylinders manuell, z. B. durch Eindrehen einer Schraube gegen die Federkraft bewegt wird und somit die Feststellbremse gelöst wird, oder durch Aufbringen eines manuell erzeugten hydraulischen Druckes mit Hilfe z. B. einer Handpumpe, der Kolben des ersten Hydraulikzylinders mit Druck beaufschlagt werden kann, um die Feststellbremse zu lösen. Im normalen Betrieb des Fahrzeugs wird der hydraulische Druck zur Entriegelung der Feststellbremse von einer Pumpe erzeugt, welche im Fahrzeug für z. B. die Lenkung oder die Hubzylinder vorhanden ist. Der Antrieb der Stirnradstufe kann vorzugsweise über einen Elektromotor, welcher direkt an der Antriebseinheit angebaut ist, oder über einen zentralen Motor, welcher über ein Differential jeweils den Antrieb einer Antriebseinheit antreibt. Wird ein zentraler Motor mit einem Differential verwendet, so hat die Anordnung der Betriebs- und Feststellbremse in der Antriebseinheit den weiteren Vorteil, daß gegenüber einer Betriebs- und Feststellbremse am Antriebsmotor jede Antriebseinheit gebremst wird und somit die Bremswirkung in jedem Fall gewährleistet ist, da das Differential nicht der Bremse nachgeschaltet ist.

Diese Ausführung der Bremse bietet den weiteren Vorteil, daß das Fahrzeug mit einem Ventil ausgerüstet werden kann, welches immer dann den hydraulischen Bremskreis drucklos schaltet, wenn die vom Fahrer vorgegebene Geschwindigkeit Null und die Fahrzeuggeschwindigkeit ebenfalls Null ist. Somit wird die Haltebremse, z. B. wenn das Fahrzeug an einer Steigung, wie bei einer Beladerampe, gehalten werden muß, automatisch eingelegt und das Fahrzeug muß in diesem Zustand nicht über die Betriebsbremse oder den Antriebsmotor gehalten wrden. Soll wieder angefahren werden, so ist die vorgegebene Geschwindigkeit ≠ 0 und die Haltebremse wird durch Druckbeaufschlagung wieder gelöst.

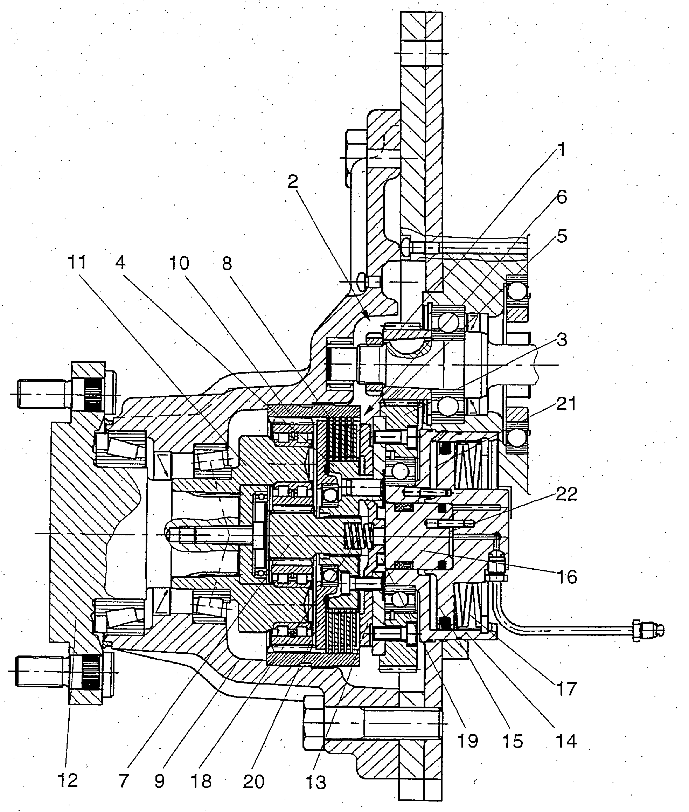

Die einzige Figur zeigt ein Ausführungsbeispiel der Erfindung, bei welcher ein nicht dargestellter Antrieb das Ritzel 1 eines Stirnradgetriebes 2 und somit das Abtriebsrad 3 des Stirnradgetriebes 2 antreibt. Mit dem Abtriebsrad 3 ist drehfest ein Lamellenträger 4, welcher einerseits mit den Innenlamellen 5 einer Lamellenbremse 6 und andererseits einem inneren Zentralrad 7 verbunden ist. Die Außenlamellen 8 sind drehfest über ein Hohlrad 10 mit dem Gehäuseteil 9 verbunden. Das innere Zentralrad 7 treibt einen Planetenträger 11, welcher mit dem Abtrieb 12 der Antriebseinheit verbunden ist, an. Zwischen dem Lamellenträger 4 und dem Abtriebsrad 3 des Stirnradgetriebes 2 ist eine Druckplatte 13 axial verschiebbar, jedoch drehfest mit dem Lamellenträger 4 verbunden. Koaxial zum inneren Zentralrad 7 ist ein erster Hydraulikzylinder 14 mit einem Kolben 15 und einem zweiten Kolben 16 sowie Federn 17 angeordnet. Im drucklosen Zustand drückt die Feder 17 den Kolben 15 gegen den zweiten Kolben 16, welcher sich über ein Lager 19 auf der Druckplatte 13 abstützt, wobei die Druckplatte 13 gegen die Lamellen der Lamellenbremse 6 gedrückt wird. Die Lamellen der Lamellenbremse 6 stützen sich auf einer Druckplatte 20, welche im Hohlrad 10 axial fixiert und im Gehäuseteil 9 angeordnet ist, ab. Die Lamellenbremse 6 verbindet somit in diesem Zustand den Lamellenträger 4 kraftschlüssig mit dem Gehäuseteil 9 und hält die Antriebseinheit in Form einer Feststellbremse gebremst. Wird der Raum 21 über eine nicht dargestellte Pumpe mit Druck beaufschlagt, so bewegt sich der Kolben 15 gegen die Federkraft der Feder 17 bis zu seinem Anschlag. Die Feder 18 drückt die Druckplatte 13 und den zweiten Kolben 16 soweit zurück, bis der zweite Kolben 16 im Kolben 15 ansteht. Indem die Druckplatte 13 nicht mehr auf die Lamellenbremse 6 gedrückt wird, ist diese geöffnet. Die Feder 18 erfüllt einerseits die Funktion, daß die Lamellenbremse 6 gelüftet wird und andererseits das Lager 19 immer unter Vorspannung bleibt. Wird nun der Raum 22 mit Druck beaufschlagt, so bewegt sich der zweite Kolben 16 in axialer Richtung und drückt über das Lager 19 die Druckplatte 13 auf die Lamellen der Lamellenbremse 6. Je nach Höhe des Drucks im Raum 22 kann das Bremsmoment der Lamellenbremse 6 eingestellt werden. Bei einem Defekt an der Antriebsanlage oder einem Leck in der Hydraulikanlage baut sich der Druck im Raum 21 und Raum 22 ab, so daß die Druckplatte 13 über das Lager 19 den zweiten Kolben 16 den Kolben 15 von der Feder 17 auf die Lamellenbremse 6 gedrückt wird und diese schließt.

### Bezugszeichen

- 1: Ritzel
- 2: Stirnradgetriebe
- 3: Abtriebsrad
- 4: Lamellenträger
- 5: Innenlamellen
- 6: Lamellenbremse
- 7: Inneres Zentralrad
- 8: Außenlamelle
- 9: Gehäuseteil
- 10: Hohlrad
- 11: Planetenträger
- 12: Abtrieb
- 13: Druckplatte
- 14: ersten Hydraulikzylinder
- 15: Kolben
- 16: zweiter Kolben
- 17: Feder
- 18: Feder
- 19: Lager
- 20: Druckplatte
- 21: Raum
- 22: Raum

## Patentansprüche

1. Getriebeeinheit, insbesondere für Fahrzeuge, bestehend aus einer antriebsseitigen Getriebestufe (2) mit mindestens zwei Zahnrädern (1, 3), einem abtriebsseitigen Planetengetriebe (7, 10, 11) und einer Bremseinrichtung (6), wobei die Getriebestufe (2) zur Kraftübertragung mit einer Antriebseinheit verbindungsfähig ist und das zweite, angetriebene Zahnrad (3) mit einem Sonnenrad (7) des Planetengetriebes verbunden und die Bremseinrichtung (6) zwischen dem Planetengetriebe und einer Getriebestufe (2) angeordnet ist und wobei die Bremseinrichtung (6) durch mindestens ein axial bewegliches Andruckelement (13, 15, 15) beaufschlagbar ist, um den Bremskontakt zu erreichen, **dadurch gekennzeichnet, daß** die Bremseinrichtung (6) durch zwei unabhängig voneinander arbeitende Andruckelemente (15, 16) innerhalb des Getriebegehäuses beaufschlagbar ist, wobei zumindest ein erstes Andruckelement (15) im drucklosen Betriebszustand des Druckmittels die Bremseinrichtung (6) beaufschlagt und nach Erreichen eines Betriebsdruckes die Beaufschlagung der Bremseinrichtung (6) durch das erste Andruckelement (15) aufgehoben ist.

2. Getriebeeinheit nach Anspruch 1, **dadurch gekennzeichnet, daß** das Andruckelement (15) durch einen Federspeicher (17) beaufschlagbar ist, welcher axial zur Getriebestufe (2) bzw. zum Planetengetriebe (7, 10, 11) angeordnet ist.

3. Getriebeeinheit nach Anspruch 1 oder 2, **dadurch gekennzeichnet, daß** ein zweites Andruckelement (16) durch ein Druckmittel beaufschlagbar ist und die Bremseinrichtung (6) betätigt.

4. Getriebeeinheit nach einem oder mehreren der Ansprüche 1 bis 3, **dadurch gekennzeichnet, daß** die Andruckelemente (15, 16) unmittelbar oder mittelbar über ein weiteres Andruckelement (13) auf die Bremseinrichtung einwirken.

5. Getriebeeinheit nach einem oder mehreren der Ansprüche 1 bis 4, **dadurch gekennzeichnet, daß** die Andruckelemente (15, 16) aus zwei koaxial angeordneten Bremszylindern bestehen, welche jeweils unabhängig voneinander mit Druckmittel beaufschlagt sind und entgegengesetzte Hubbewegungen ausführen.

6. Getriebeeinheit nach einem oder mehreren der Ansprüche 1 bis 5, **dadurch gekennzeichnet, daß** der Federspeicher aus mehreren Tellerfedern (17) besteht, welche durch das erste Andruckelement (15) vorgespannt sind.

7. Getriebeeinheit nach einem oder mehreren der Ansprüche 1 bis 6, **dadurch gekennzeichnet, daß** das erste Andruckelement (15) einenends in Kontakt mit dem Federspeicher und anderenends mit der Bremseinrichtung (6) bzw. ein weiteres Andruckelement (13) steht.

8. Getriebeeinheit nach einem oder mehreren der Ansprüche 1 bis 7, **dadurch gekennzeichnet, daß** zwischen dem Getriebegehäuseteil und dem ersten Andruckelement (15) ein von außen mit Druckmittel beaufschlagbarer, abgedichteter erster (21) Druckraum ausgebildet ist.

9. Getriebeeinheit nach einem oder mehreren der Ansprüche 1 bis 8, **dadurch gekennzeichnet, daß** der erste Druckraum (21) bei Beaufschlagung zur Vorspannung des Federspeichers vorgesehen ist, während der zweite Druckraum (22) einen sofortigen Bremsvorgang einleitet.

10. Getriebeeinheit nach einem oder mehreren der Ansprüche 1 bis 9, **dadurch gekennzeichnet, daß** die Bremseinrichtung (6) ohne Betriebsdruck des Druckmittels durch den Federspeicher und das erste Andruckelement (15) beaufschlagt ist.

11. Getriebeeinheit nach einem oder mehreren der Ansprüche 1 bis 10, **dadurch gekennzeichnet, daß** die Bremseinrichtung (6) aus einer Lamellenbremse besteht, wobei zumindest eine erste Lamelle (8) unmittelbar oder mittelbar starr mit dem Gehäuse (9) und mindestens eine zweite Lamelle (8) mit dem angetriebenen Zahnrad (1) der Getriebestufe (2) starr gekoppelt ist.
